# FASCICULE DE BREVET EUROPEEN

(11) **EP 3 318 450 B1**
(45) Date de publication et mention de la délivrance du brevet: **04.03.2020**
(21) Numéro de dépôt: 17196083.4
(22) Date de dépôt: 12.10.2017
(51) Int. Cl.: B60R 19/52

(54) **ELEMENTS DE DIMINUTION DE L ENDOMMAGEMENT DES PIECES D'UN VEHICULE EN CAS DE CHOC PAR L'AVANT**
ELEMENTE ZUR VERRINGERUNG DER BESCHÄDIGUNG VON FAHRZEUGTEILEN IM FALLE EINES AUFPRALLS VON VORNE
ELEMENTS FOR REDUCING THE DAMAGE OF PARTS OF A VEHICLE IN THE EVENT OF AN IMPACT FROM THE FRONT

(30) Priorité: 08.11.2016 FR 1660814
(43) Date de publication de la demande: 09.05.2018
(73) Titulaire: PSA Automobiles SA, 78300 Poissy (FR)
(72) Inventeur: BOUTIN, Pierre Emmanuel, 92100 BOULOGNE-BILLANCOURT (FR); JEANNEAU, Clément, 92100 BOULOGNE-BILLANCOURT (FR)
(74) Mandataire: Fernandez, Francis Lionel

(56) Documents cités:
- EP-A1- 2 447 101
- WO-A1-03/039915

## Description

L'invention s'inscrit dans le domaine de la protection des véhicules automobiles contre les chocs, et ici plus particulièrement les chocs par l'avant.

En cas de choc par l'avant à une vitesse modérée, par exemple 10 ou 20 km/h, il est souhaité ne remplacer que les pièces endommagées dans le compartiment avant du véhicule, qui doivent être en nombre le plus réduit possible. Typiquement, cet aspect de la conception des véhicules et de leurs performances en situation de vie est évalué par des tests normés, et ici le choc normé appelé choc réparabilité avant. Après un tel choc normé pour évaluation, un expert fait la liste de toutes les pièces endommagées et estime un chiffrage économique sur le coût de la réparation du véhicule. Moins de pièces sont endommagées, plus le chiffrage est favorable.

On connait du document FR29011231 une face avant de véhicule automobile, à fixer sur l'avant de la caisse et comportant un groupe moto-ventilateur et un radiateur. La face avant est configurée pour que des attaches métalliques déformables absorbent de l'énergie et permettent de préserver l'intégrité du groupe moto-ventilateur.

Le document EP2447101 décrit un méthode de mise en place sur un véhicule automobile d'éléments de diminution de l'endommagement des pièces du véhicule en cas de choc par l'avant selon le préambule de la revendication 1 et un véhicule automobile selon le préambule de la revendication 5.

Mais on ne sait pas préserver le module d'entrée d'air piloté qui est placé sur différents véhicules devant le groupe moto-ventilateur, aux fins de moduler l'entrée d'air. Il s'agit là d'une pièce assez coûteuse, qui est d'introduction récente dans les véhicules automobile mais qui est amenée à se généraliser au fil des années, pour chercher à diminuer la consommation de carburant. Qui plus est, on ne connait pas de solution qui permettrait de manière simple, de préserver les modules d'entrée d'air piloté qui sont placés sur certains modèles en avant du groupe moto-ventilateur, facilement, y compris en cas de changement de ce module d'entrée d'air piloté sur un véhicule donné et son remplacement par un module ayant une épaisseur plus importante, et donc de nature à recevoir l'impact du choc plus tôt, ou à choc plus faible.

Pour résoudre cette difficulté il est proposé une méthode de mise en place sur un véhicule automobile d'éléments de diminution de l'endommagement des pièces du véhicule en cas de choc par l'avant, comprenant la mise en place d'une poutre transversale de protection contre les chocs frontaux à l'avant du véhicule, ladite poutre étant disposée, en sorte de mener une course vers l'arrière du véhicule en cas de choc par l'avant, la mise en place d'un impacteur pour protéger une façade avant d'un groupe moto-ventilateur du véhicule, ledit impacteur étant configuré pour recevoir, en cas de choc par l'avant, et s'il n'est pas modifié par une extension d'impacteur, uniquement dans une phase tardive de la course, l'appui de la poutre et, sous l'effet de cet appui, reculer vers l'arrière du véhicule et entraîner le groupe moto-ventilateur dont la façade est alors gardée à l'écart de la poutre. Dans cette méthode, il est mis en avant de plus le fait que le véhicule étant de plus équipé d'un module d'entrée d'air piloté fixé au groupe moto-ventilateur sur une façade avant de celui-ci pour moduler l'aération fournie au groupe moto-ventilateur, la méthode comprend la mise en place d'une extension d'impacteur qui est adaptée audit module d'entrée d'air piloté, pour en cas de choc par l'avant, recevoir dès une phase précoce de la course l'appui de la poutre, et sous l'effet de cet appui, reculer vers l'arrière du véhicule et entraîner le module d'entrée d'air piloté par l'intermédiaire du groupe moto-ventilateur, le module d'entrée d'air piloté étant alors gardé à l'écart de la poutre.

Cette solution permet de sauver les modules d'entrée d'air pilotés de manière spécifique à chaque projet suivant le volume disponible.

Différentes caractéristiques avantageuses et optionnelles sont les suivantes ;
- la mise en place de l'extension d'impacteur est faite en référence à un type de chocs d'endommagement du véhicule compatible avec une réparation du véhicule par remplacement de pièces endommagées, pour lequel, en l'absence d'extension d'impacteur, l'impacteur recule d'une première distance, et pour lequel, avec l'extension d'impacteur, l'impacteur recule d'une deuxième distance supérieure à la première distance ;
- la mise en place de l'extension d'impacteur est faite par vissage sur l'impacteur, de l'extension d'impacteur ;
- le module d'entrée d'air piloté est constitué d'une ossature formant un panneau dressé face à l'avant du véhicule, et de volets supérieur et inférieur dans le panneau.

L'invention porte aussi sur un véhicule automobile comprenant des éléments de diminution de l'endommagement des pièces du véhicule en cas de choc par l'avant, lesdits éléments comprenant une poutre transversale de protection contre les chocs frontaux à l'avant du véhicule, ladite poutre étant disposée en sorte de mener une course vers l'arrière du véhicule en cas de choc par l'avant, un impacteur disposé pour protéger une façade avant d'un groupe moto-ventilateur du véhicule, ledit impacteur étant configuré pour recevoir, en cas de choc par l'avant, l'appui de la poutre et, sous l'effet de cet appui, reculer vers l'arrière du véhicule et entraîner le groupe moto-ventilateur dont la façade est alors gardée à l'écart de la poutre. Ce véhicule est de plus équipé d'un module d'entrée d'air piloté fixé au groupe moto-ventilateur sur une façade avant de celui-ci pour moduler l'aération fournie au groupe moto-ventilateur, l'impacteur est un impacteur étendu vers l'avant pour être adapté audit module d'entrée d'air piloté, pour en cas de choc par l'avant, recevoir lors la course l'appui de la poutre, et sous l'effet de cet appui, reculer vers l'arrière du véhicule et entraîner le module d'entrée d'air piloté par l'intermédiaire du groupe moto-ventilateur, le module d'entrée d'air piloté étant alors gardé à l'écart de la poutre.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue de trois quart d'un mode de réalisation de l'invention avant la mise en place d'un impacteur adapté ;
- la figure 2 est une vue de coupe de la configuration de la figure 1 ;
- la figure 3 est une vue de trois quart du même mode de réalisation de l'invention après la mise en place de l'impacteur adapté ;
- la figure 4 est une vue de coupe de la configuration de la figure 3 ;
- la figure 5 est un schéma de fonctionnement de l'invention dans la configuration des figures 3 et 4 à un premier instant d'un choc par l'avant ;
- la figure 6 est un schéma de fonctionnement de l'invention dans la configuration des figures 3 et 4 à un deuxième instant d'un choc par l'avant ;
- la figure 7 est un schéma de fonctionnement de l'invention dans la configuration des figures 3 et 4 à un troisième instant d'un choc par l'avant.

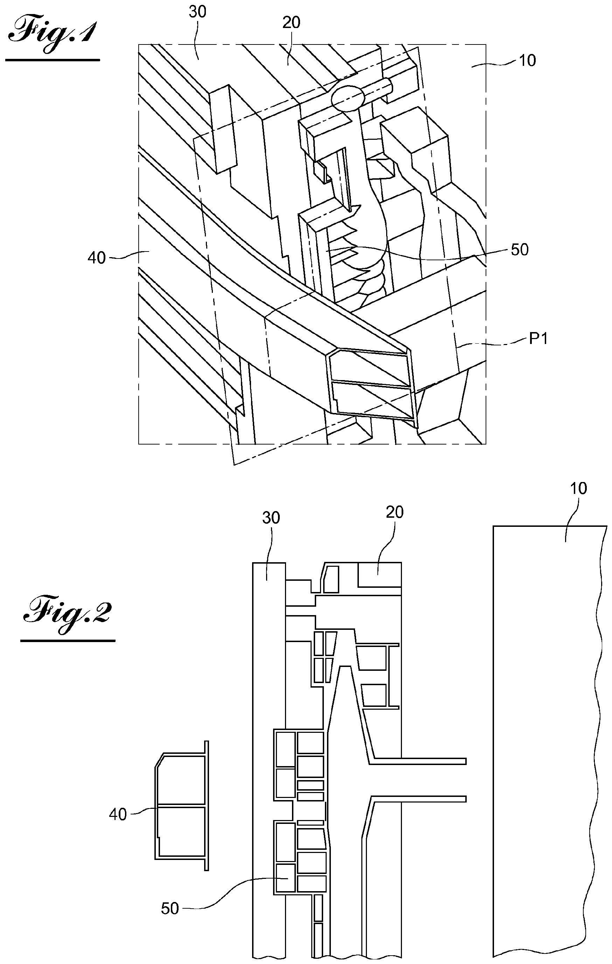

Les figures 1 et 2 montrent le positionnement des différentes pièces, dans le compartiment avant d'un véhicule automobile, du type berline haut de gamme, avec un porte à faux avant assez long comme cela est rencontré sur ces véhicules. La vue de la figure 1 est une vue de trois quart, d'un point de vue en hauteur, décalé sur le côté. La figure 2 est une vue de coupe selon le plan P1 représenté en figure 1.

Le moteur thermique 10 est présent à l'arrière de la vue, et devant lui se trouve le groupe moto-ventilateur 20.

Encore devant celui-ci, en se déplaçant vers l'avant du véhicule, se trouve le module d'entrée d'air piloté 30, qui est un système de forme globalement rectangulaire dressé verticalement devant le groupe moto-ventilateur 20, pour modifier l'aération de celui-ci, en ouvrant ou fermant avec différents niveaux de réglage l'entrée d'air de refroidissement du moteur. Sa grande dimension est placée horizontalement. Il a une épaisseur, c'est-à-dire sa dimension dans la direction longitudinale du véhicule, qui peut différer d'un modèle de voiture à un autre. Et sur un même modèle de voiture il peut être remplacé par un autre module d'entrée d'air piloté dont l'épaisseur est différente. Il est en général constitué d'une ossature formant un panneau dressé face à l'avant du véhicule, et de volets supérieur et inférieur dans le panneau.

Finalement, toujours en se déplaçant vers l'avant, on trouve une poutre anti-choc 40. Il peut s'agir d'une structure à déformation programmée. En cas de choc frontal, c'est cette poutre 40 qui reçoit l'appui de la structure avec laquelle le véhicule entre en collision, typiquement un mur vertical. Elle se déforme et recule en direction du groupe moto-ventilateur 20.

Le groupe moto-ventilateur 20 est maintenu solidaire d'un impacteur 50 qui, dans sa forme de base, c'est-à-dire dans une forme standard, non spécialement conçue pour protéger le modèle de module d'entrée d'air piloté 30 est adapté à essentiellement protéger le groupe moto-ventilateur 20. Il le fait en, en cas de choc frontal, recevant l'appui de la poutre 40 qui recule, avant qu'elle n'entre en contact avec le groupe moto-ventilateur 20. Cela est possible, de par la disposition de l'impacteur 50 sur le côté du groupe moto-ventilateur 20 et du module d'entrée d'air piloté 30, et de par le fait que l'impacteur dépasse, vers l'avant du véhicule du groupe moto-ventilateur 20. Par conséquent, l'impacteur 50 entame, sous l'effet de l'appui de la poutre 40, un recul, et entraine avec lui le groupe moto-ventilateur 20, car celui-ci lui est attaché rigidement. L'entrainement se fait sans que le groupe moto-ventilateur 20 ne soit endommagé, la liaison entre l'impacteur 50 et le groupe moto-ventilateur 20 étant conçue à cette fin. Typiquement, pour un choc répérabilité normalisé à 10 ou 20 km/h, le recul est de 20 mm à la fin de la course, quand l'ensemble des éléments s'immobilisent.

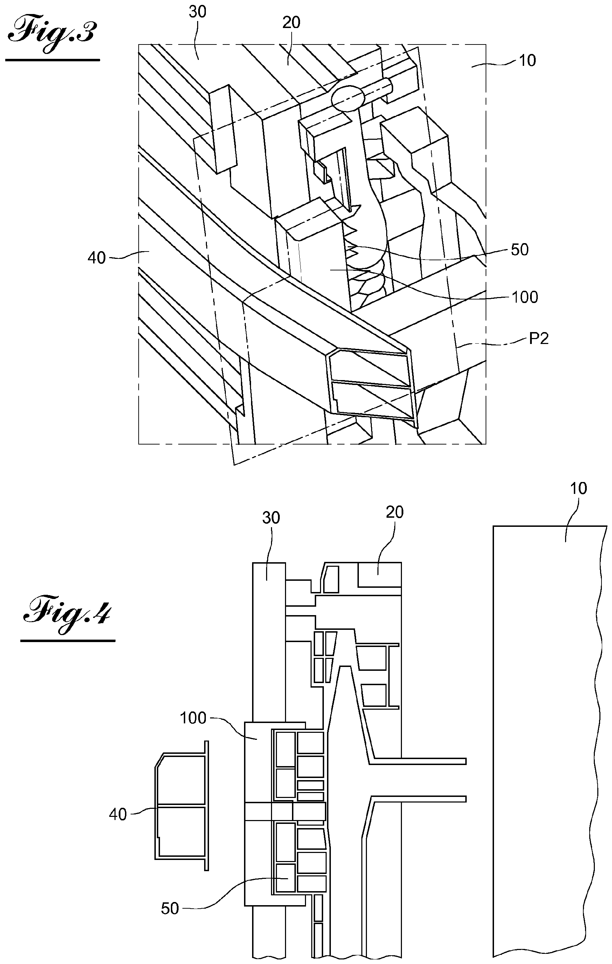

En figures 3 et 4, on a représenté les mêmes éléments, après la mise en place d'une extension d'impacteur 100 sur l'impacteur 50. L'ensemble constitué de l'impacteur 50 et de l'extension 100 constitue un impacteur étendu vers l'avant. La figure 4 est une vue de coupe, selon le plan P2 de la figure 3, similaire au plan P1 de la figure 1.

L'extension d'impacteur 100 est configurée pour ne pas gêner l'entrée d'air dans le module d'entrée d'air piloté 30. Par ailleurs, cette extension 100 prolonge l'impacteur 50 vers l'avant du véhicule, en sorte que lors de son recul, la poutre 40 rencontre l'extension d'impacteur 100 et la pousse, sans qu'elle ne rencontre l'impacteur 50, qui est derrière l'extension 100. La poussée de la poutre 40 sur l'extension provoque la poussée de l'impacteur 50 par l'extension 100, et l'impacteur 50 entame, sous l'effet de l'appui de la poutre 40 sur l'extension, un recul, et entraine avec lui le groupe moto-ventilateur 20, car celui-ci lui est attaché rigidement. L'entrainement se fait sans que le groupe moto-ventilateur 20 ne soit endommagé, les liaisons entre l'extension 100, l'impacteur 50 et le groupe moto-ventilateur 20 étant conçues à cette fin.

En figure 4, on a représenté le fait que l'extension 100 a globalement une forme de couvercle fixé sur l'impacteur 50 et l'entourant, au-dessus, en dessous et sur sa face avant. En figure 3, il apparaît que l'extension 100 recouvre aussi l'impacteur sur sa face latérale, du côté du flanc du véhicule.

L'extension d'impacteur 100 est dimensionnée, dans la direction longitudinale du véhicule, pour que la poutre 40 appuie sur sa face avant alors qu'elle n'a pas encore rencontré le module d'entrée d'air piloté 30. Ce dimensionnement est effectué pour le modèle ou type précis de module d'entrée d'air piloté monté dans le véhicule. Ainsi, l'extension 100 provoque le recul du groupe moto-ventilateur 20, et celui du module d'entrée d'air piloté 30 qui est fixé sur la face avant de celui-ci, avant tout endommagement de celui-ci, et quel que soit le modèle ou type exact du module d'entrée d'air piloté 30 utilisé. En effet, si ce module est démonté et remplacé par un autre module ayant une épaisseur plus importante, il suffit de changer l'extension 100 pour adapter sa dimension dans la direction longitudinale du véhicule, en l'augmentant, pour faire en sorte que la fonction impacteur soit mise en œuvre plus tôt dans le choc, et que le module d'entrée d'air piloté 30 soit préservé.

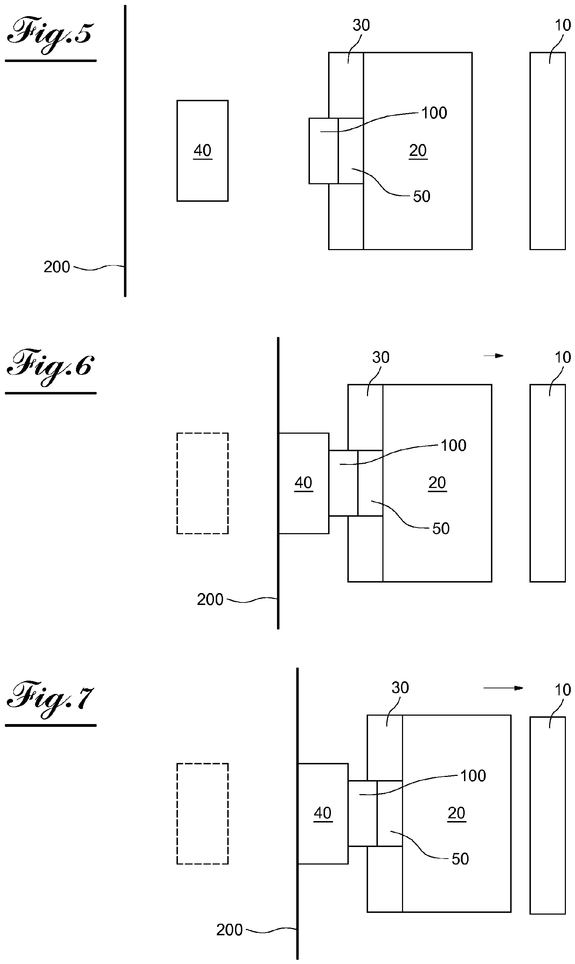

Les figures 5 à 7 présentent la cinématique de collision. L'obstacle 200 est représenté à gauche. Il se déplace vers le véhicule, par exemple à 20 km/h. Il rencontre en premier lieu la poutre 40. Celle-ci est poussée de son emplacement initial, représenté aux figures 6 et 7 par des pointillés, vers la droite. À partir de l'instant représenté en figure 6, qui correspond à une phase précoce de la course de la poutre 40, la poutre 40 touche l'extension d'impacteur 100, et provoque le déplacement simultané vers l'arrière du véhicule de l'extension d'impacteur 100, de l'impacteur 50, du groupe moto-ventilateur 20 et du module d'entrée d'air piloté 30. La course se poursuit jusqu'à ce que, pour un choc modéré, le groupe moto-ventilateur 20 s'arrête avant de toucher le moteur thermique 10 du véhicule, comme cela est représenté en figure 7. En l'absence de l'extension d'impacteur 100, la poutre 40 aurait touché l'impacteur 50 lors d'une phase tardive de la course de la poutre 40. La course se poursuit jusqu'à ce que, pour un choc modéré, le groupe moto-ventilateur 20 s'arrête avant de toucher le moteur thermique 10 du véhicule, mais le module d'entrée d'air piloté 30 aurait été écrasé avant la phase tardive de la course.

Par exemple sur un véhicule pour lequel, en l'absence d'extension d'impacteur, le recul du groupe moto-ventilateur aurait été de seulement 10 mm, le recul du groupe moto-ventilateur 20 muni de son extension d'impacteur est de l'ordre de 40 mm, entre les figures 5 et 7. Le recul du module d'entrée d'air piloté 30 est également de 40 mm. Le module d'entrée d'air piloté 30 n'est pas comprimé, pas endommagé, au même titre que la façade du groupe moto-ventilateur 20. Il n'est donc pas nécessaire de le changer pour réparer le véhicule et le coût de la réparation est donc faible.

On remarque que selon l'invention, l'adaptation de l'extension d'impacteur 100 est faite en fonction du volume disponible dans le compartiment avant du véhicule, qui est plus grand pour les véhicules ayant un porte à faux avant conséquent, comme les berlines haut de gamme, pour lesquelles, en l'absence d'extension d'impacteur, le recul du groupe moto-propulseur n'est que de 10 mm par exemple pour un choc normé à 10 ou 20 km/h. Si le porte à faux avant est faible, il est difficile de protéger le module d'entrée d'air piloté pour des chocs impliquant un recul de la poutre 40 dans un tel choc normé à 10 ou 20 km/h.

## Revendications

1. Méthode de mise en place sur un véhicule automobile d'éléments de diminution de l'endommagement des pièces du véhicule en cas de choc par l'avant, comprenant la mise en place d'une poutre transversale de protection (40) contre les chocs frontaux à l'avant du véhicule, ladite poutre étant disposée en sorte de mener une course vers l'arrière du véhicule en cas de choc par l'avant, la mise en place d'un impacteur (50) pour protéger une façade avant d'un groupe moto-ventilateur (20) du véhicule, ledit impacteur (50) étant configuré pour recevoir, en cas de choc par l'avant, dans une phase tardive de la course, l'appui de la poutre (40) et, sous l'effet de cet appui, reculer vers l'arrière du véhicule et entraîner le groupe moto-ventilateur (20) dont la façade est alors gardée à l'écart de la poutre (40), **caractérisé en ce que**, le véhicule étant de plus équipé d'un module d'entrée d'air piloté (30) fixé au groupe moto-ventilateur (20) sur une façade avant de celui-ci pour moduler l'aération fournie au groupe moto-ventilateur (20), la méthode comprend de plus la mise en place d'une extension d'impacteur (100) qui est adaptée audit module d'entrée d'air piloté (100), pour en cas de choc par l'avant, recevoir dès une phase précoce de la course l'appui de la poutre (40), et sous l'effet de cet appui, reculer vers l'arrière du véhicule et entraîner le module d'entrée d'air piloté (30) par l'intermédiaire du groupe moto-ventilateur (20), le module d'entrée d'air piloté (30) étant alors gardé à l'écart de la poutre.

2. Méthode de mise en place d'éléments de diminution de l'endommagement des pièces automobiles en cas de choc par l'avant d'un véhicule automobile selon la revendication 1, **caractérisé en ce que** la mise en place de l'extension d'impacteur (100) est faite par vissage sur l'impacteur (50), de l'extension d'impacteur (100).

3. Méthode de mise en place d'éléments de diminution de l'endommagement des pièces automobiles en cas de choc par l'avant d'un véhicule automobile selon la revendication 1 ou la revendication 2, **caractérisé en ce que** la mise en place de l'extension d'impacteur (100) est faite en référence à un type de chocs d'endommagement du véhicule compatible avec une réparation du véhicule par remplacement de pièces endommagées, pour lequel, en l'absence d'extension d'impacteur (100), l'impacteur (50) recule d'une première distance, et pour lequel, avec l'extension d'impacteur (100), l'impacteur (50) recule d'une deuxième distance supérieure à la première distance.

4. Méthode de mise en place d'éléments de diminution de l'endommagement des pièces automobiles en cas de choc par l'avant d'un véhicule automobile selon l'une des revendications 1 à 3, **caractérisé en ce que** le module d'entrée d'air piloté (30) est constitué d'une ossature formant un panneau dressé face à l'avant du véhicule, et de volets supérieur et inférieur dans le panneau.

5. Véhicule automobile comprenant des éléments de diminution de l'endommagement des pièces du véhicule en cas de choc par l'avant, lesdits éléments comprenant une poutre transversale de protection (40) contre les chocs frontaux à l'avant du véhicule, ladite poutre étant disposée en sorte de mener une course vers l'arrière du véhicule en cas de choc par l'avant, un impacteur (50, 100) disposé pour protéger une façade avant d'un groupe moto-ventilateur (20) du véhicule, ledit impacteur (50) étant configuré pour recevoir, en cas de choc par l'avant, l'appui de la poutre (40) et, sous l'effet de cet appui, reculer vers l'arrière du véhicule et entraîner le groupe moto-ventilateur (20) dont la façade est alors gardée à l'écart de la poutre (40), **caractérisé en ce que**, le véhicule étant de plus équipé d'un module d'entrée d'air piloté (30) fixé au groupe moto-ventilateur (20) sur une façade avant de celui-ci pour moduler l'aération fournie au groupe moto-ventilateur (20), l'impacteur (50, 100) est un impacteur étendu vers l'avant adapté audit module d'entrée d'air piloté (30), pour en cas de choc par l'avant, recevoir lors la course l'appui de la poutre (40), et sous l'effet de cet appui, reculer vers l'arrière du véhicule et entraîner le module d'entrée d'air piloté (30) par l'intermédiaire du groupe moto-ventilateur (20), le module d'entrée d'air piloté (30) étant alors gardé à l'écart de la poutre (40).

## Patentansprüche

1. Verfahren zum Einrichten auf einem Kraftfahrzeug von Elementen zur Verringerung der Beschädigung der Teile des Fahrzeugs im Falle eines Aufpralls von vorn, das das Einrichten eines Querträgers (40) zum Schutz vor Frontalaufprall an der Vorderseite des Fahrzeugs umfasst, wobei der Träger derart angeordnet ist, dass er ein Hub zur Rückseite des Fahrzeugs im Falle eines Aufpralls von vorn ausführt, das Einrichten eines Impaktors (50), um eine Vorderfassade eines Lüftersatzes (20) des Fahrzeugs zu schützen, wobei der Impaktor (50) konfiguriert ist, um im Falle eines Aufpralls von vorn in einer späten Phase des Hubs das Aufliegen des Trägers (40) zu erhalten, und, unter der Einwirkung dieses Aufliegens zur Rückseite des Fahrzeugs zurückzufahren und den Lüftersatz (20) mitzunehmen, dessen Fassade daher abseits des Trägers (40) gehalten wird, **dadurch gekennzeichnet, dass** das Fahrzeug außerdem mit seinem Eingangsmodul gesteuerter Luft (30) ausgestattet ist, das an dem Lüftersatz (20) auf einer Vorderfassade befestigt ist, um die Belüftung, die zu dem Lüftersatz (20) geliefert wird, zu modulieren, wobei das Verfahren außerdem die Einrichtung einer Impaktorerweiterung (100) umfasst, die an das Eingangsmodul gesteuerter Luft (100) angepasst ist, damit im Falle eines Aufpralls von vorn ab einer frühen Phase des Hubs das Aufliegen des Trägers (40) empfangen wird, und unter der Einwirkung dieses Aufliegens zur Rückseite des Fahrzeugs zurückzufahren und das Eingangsmodul gesteuerter Luft (30) über den Lüftersatz (20) mitzunehmen, wobei das Eingangsmodul gesteuerter Luft (30) dabei abseits des Trägers gehalten wird.

2. Verfahren zur Einrichtung von Elementen zur Verringerung der Beschädigung von Fahrzeugteilen im Falle eines Aufpralls von vorn eines Kraftfahrzeugs nach Anspruch 1, **dadurch gekennzeichnet, dass** die Einrichtung der Impaktorerweiterung (100) durch Schrauben der Impaktorerweiterung (100) auf den Impaktor (50) erfolgt.

3. Verfahren zur Einrichtung von Elementen zur Verringerung der Beschädigung von Fahrzeugteilen im Falle eines Aufpralls von vorn eines Kraftfahrzeugs nach Anspruch 1 oder Anspruch 2, **dadurch gekennzeichnet, dass** die Einrichtung der Impaktorerweiterung (100) unter Bezugnahme auf einen Typ von Beschädigungsaufprall des Fahrzeugs erfolgt, der mit einer Reparatur des Fahrzeugs durch Ersetzen beschädigter Teile kompatibel ist, bei dem, bei Fehlen einer Impaktorerweiterung (100), der Impaktor (50) um eine erste Entfernung zurückfährt, und bei dem mit der Impaktorerweiterung (100) der Impaktor (50) um eine zweite Entfernung, die größer ist als die erste Entfernung, zurückfährt.

4. Verfahren zur Einrichtung von Elementen zur Verringerung der Beschädigung von Fahrzeugteilen im Falle eines Aufpralls von vorn eines Kraftfahrzeugs nach einem der Ansprüche 1 bis 3, **dadurch gekennzeichnet, dass** das Eingangsmodul gesteuerter Luft (30) aus einem Gestell, das eine Platte bildet, die zur Vorderseite des Fahrzeugs gewandt aufgestellt ist, und oberen und unteren Klappen in der Platte besteht.

5. Kraftfahrzeug, das Elemente zur Verringerung der Beschädigung von Fahrzeugteilen im Falle eines Aufpralls von vorn umfasst, wobei die Elemente einen Querträger (40) zum Schutz vor Frontalaufprall an der Vorderseite des Fahrzeugs umfassen, wobei der Träger derart angeordnet ist, dass er einen Hub zur Rückseite des Fahrzeugs im Falle eines Aufpralls von vorn ausführt, einen Impaktor (50, 100), der angeordnet ist, um eine Vorderfassade eines Lüftersatzes (20) des Fahrzeugs zu schützen, wobei der Impaktor (50) konfiguriert ist, um im Falle eines Aufpralls von vorn das Aufliegen des Trägers (40) zu empfangen, und unter der Einwirkung dieses Aufliegens zu der Rückseite des Fahrzeugs zu fahren und den Lüftersatz (20) mitzunehmen, dessen Fassade daher abseits des Trägers (40) gehalten wird, **dadurch gekennzeichnet, dass**, da das Fahrzeug außerdem mit einem Eingangsmodul gesteuerter Luft (30) versehen ist, das an dem Lüftersatz (20) auf seiner Vorderfassade befestigt ist, um die Belüftung, die zu dem Lüftersatz (20) geliefert wird, zu modulieren, der Impaktor (50, 100) ein Impaktor ist, der nach vorn erweitert ist, der an das Eingangsmodul gesteuerter Luft (30) angepasst ist, um im Falle eines Aufpralls von vorn bei dem Hub das Aufliegen des Trägers (40) zu empfangen, und unter der Einwirkung dieses Aufliegens zu der Rückseite des Fahrzeugs zurückzufahren und das Eingangsmodul gesteuerter Luft (30) über den Lüftersatz (20) mitzunehmen, wobei das Eingangsmodul gesteuerter Luft (30) daher abseits des Trägers (40) gehalten wird.

## Claims

1. A method for installing on a motor vehicle elements for reducing the damage of parts of the vehicle in the event of an impact from the front, including the installing of a transverse beam for protection (40) against frontal impacts at the front of the vehicle, said beam being disposed so as to lead a course towards the rear of the vehicle in the event of impact from the front, the installing of an impactor (50) to protect a front face of a motor-fan unit (20) of the vehicle, said impactor (50) being configured to receive, in the event of impact from the front, in a late phase of the course, the support of the beam (40) and, under the effect of this support, to withdraw towards the rear of the vehicle and to entrain the motor-fan unit (20), the front of which is then kept away from the beam (40), **characterized in that**, the vehicle being in addition equipped with a driven air intake module (30) fixed to the motor-fan unit (20) on a front face thereof for modulating the ventilation provided to the motor-fan unit (20), the method includes in addition the installing of an impactor extension (100) which is adapted to said driven air intake module (100), to receive, in the event of impact from the front, from an early phase of the course, the support of the beam (40), and under the effect of this support, to withdraw towards the rear of the vehicle and to entrain the driven air intake module (30) via the motor-fan unit (20), the driven air intake module (30) being then kept away from the beam.

2. The method for installing elements for reducing damage to motor vehicle parts in the event of an impact from the front of a motor vehicle according to Claim 1, **characterized in that** the installing of the impactor extension (100) is carried out by screwing on the impactor (50) of the impactor extension (100).

3. The method for installing elements for reducing damage to motor vehicle parts in the event of an impact from the front of a motor vehicle according to Claim 1 or Claim 2, **characterized in that** the installing of the impactor extension (100) is made with reference to a type of damage impacts to the vehicle compatible with a repair of the vehicle by replacement of damaged parts, for which, in the absence of an impactor extension (100), the impactor (50) withdraws by a first distance, and for which, with the impactor extension (100), the impactor (50) withdraws by a second distance greater than the first distance.

4. The method for installing elements for reducing damage to motor vehicle parts in the event of impact from the front of a motor vehicle according to one of Claims 1 to 3, **characterized in that** the driven air intake module (30) is constituted by a framework forming a panel which is set facing the front of the vehicle, and of upper and lower flaps in the panel.

5. A motor vehicle including elements for reducing damage to parts of the vehicle in the event of an impact from the front, said elements including a transverse beam (40) for protection against frontal impacts at the front of the vehicle, said beam being disposed so as to lead a course towards the rear of the vehicle in the event of an impact from the front, an impactor (50, 100) disposed to protect a front face of a motor-fan unit (20) of the vehicle, said impactor (50) being configured to receive, in the event of an impact from the front, the support of the beam (40) and, under the effect of this support, to withdraw towards the rear of the vehicle and to entrain the motor-fan unit (20), the face of which is then kept away from the beam (40), **characterized in that**, the vehicle being in addition equipped with a driven air intake module (30) fixed to the motor-fan unit (20) on a front face thereof for modulating the ventilation provided to the motor-fan unit (20), the impactor (50, 100) is an extended impactor towards the front adapted to said driven air intake module (30), to receive, in the event of an impact from the front, during the course the support of the beam (40), and under the effect of this support, to withdraw towards the rear of the vehicle and to entrain the driven air intake module (30) via the motor-fan unit (20), the driven air intake module (30) being then kept away from the beam (40) .
